# EUROPÄISCHE PATENTANMELDUNG

(11) **EP 1 724 702 A1**
(43) Veröffentlichungstag der Anmeldung: **22.11.2006**
(21) Anmeldenummer: 05103994.9
(22) Anmeldetag: 12.05.2005
(51) Int. Cl.: G06K 7/00, G06K 19/073, G07F 7/10

(54) **Verfahren und System zur Übertragung von RFID Identifikationsdaten**

(71) Anmelder: Swisscom AG, 3000 Bern 29 (CH)
(72) Erfinder: Riordan, John, 3006 Bern (CH); Cantini, Renato, 1782 Belfaux (CH)
(74) Vertreter: Scheuzger, Beat Otto

(57) **Zusammenfassung**

Die Erfindung betrifft ein Verfahren und ein System zur Übertragung von RFID-Identifikationsdaten an ein RFID-Lesegerät (1). Es werden mindestens zwei Request-IDs (x₁,x₂,x₃) mit zugeordneten RFID-Identifikationsdaten (D₁,D₂,D₃) in einer Lookup-Tabelle (9) abgespeichert. Das RFID-Lesegerät sendet einen Request zur Übertragung von RFID-Identifikationsdaten (2) an einen RFID-Tag (3), wobei der Request mindestens eine Request-ID umfasst. Mittels einer Steuereinheit (4) und der Lookup-Tabelle (9) werden der Request-ID entsprechende RFID-Identifikationsdaten zugeordnet und mittels des RFID-Tags an das RFID-Lesegerät (1) übertragen.

## Beschreibung

### Technisches Gebiet

Die vorliegende Erfindung betrifft ein Verfahren und ein System zur Übertragung von RFID-Identifikationsdaten an ein RFID-Lesegerät.

### Stand der Technik

Im Stand der Technik sind Verfahren zur Übertragung von RFID-Identifikationsdaten (RFID: Radio Frequency Identification) bekannt. Diese Verfahren basieren auf einem RFID-Tag, welcher Speichermittel zur Speicherung von RFID-Identifikationsdaten umfasst, sowie auf einem RFID-Lesegerät, welches Sende- und Empfangsmittel zur Aussendung und für den Empfang von Radiowellen umfasst. Mittels des RFID-Lesegeräts werden Radiowellen an den RFID-Tag übertragen. Dabei wird der RFID-Tag zur Aussendung von Radiowellen angeregt, wobei beispielsweise mittels einer geeigneten Modulation RFID-Identifikationsdaten an das RFID-Lesegerät übertragen werden. Grundsätzlich wird zwischen so genannten aktiven RFID-Tags und passiven RFID-Tags unterschieden. Passive RFID-Tags beziehen die Energie zur Aussendung von Radiowellen aus der Energie der empfangenen Radiowellen. Aktive RFID-Tags verfügen über einen internen Energiespeicher. Passive RFID-Tags sind typischerweise kleiner und leichter als aktive RFID-Tags. Ein passiver RFID-Tag hat normalerweise eine geringere Reichweite, jedoch eine längere Lebensdauer als ein aktiver RFID-Tag. RFID-Tags werden beispielsweise für die Kennzeichnung von Waren, Produkten oder auch für die Kennzeichnung von Tieren eingesetzt. RFID-Tags werden auch für die Überwachung oder Benutzungskontrolle als elektronische Schlüssel, elektronisches Zahlungsmittel oder elektronische Fahrkarten eingesetzt. So verfügen heutzutage beispielsweise viele Zündschlüssel für Fahrzeuge über einen RFID-Tag, wobei beispielsweise nach dem Einstecken des Zündschlüssels in das Zündschloss eine elektronische Wegfahrsperre des Fahrzeugs mittels einer Übertragung von entsprechenden RFID-Identifikationsdaten entblockiert wird. Weiter werden RFID-Tags auch für die Zugangskontrollen wie beispielsweise bei Türen eingesetzt, wobei ein RFID-Tag beispielsweise in einer Personalkarte angebracht wird, wobei berechtigte Personen für den Zugang in einen zugangskontrollierten Bereich eines Betriebes ihre Personalkarte in den Wirkungsbereich eines RFID-Lesegeräts bringen, und wobei RFID-Identifikationsdaten vom RFID-Tag auf das RFID-Lesegerät übermittelt und zur Steuerung eines Schliesssystems verwendet werden. Zudem werden RFID-Tags auch als elektronisches Zahlungsmittel verwendet. Dabei wird ein RFID-Tag z.B. in einer Kundenkarte angebracht. Dem RFID-Tag wird ein Konto zugeordnet und es wird z.B. bei der Kasse eines Geschäfts ein RFID-Lesegerät aufgestellt. Zur Bezahlung von Waren bringt der Kunde die Kundenkarte in den Wirkungsbereich des RFID-Lesegeräts, wobei die RFID-Identifikationsdaten des in der Kundenkarte angebrachten RFID-Tags dazu verwendet werden, um einen Geldbetrag vom Konto des Kunden abzubuchen. Die Durchdringung unseres Alltags mit RFID-Tags nimmt wegen den vielfältigen Anwendungsmöglichkeiten von RFID-Tags laufend zu. So verfügen inzwischen viele Personen über RFID-Tags für das Öffnen der Haustür, für das Öffnen der Garagentür, für den Zugang in den Betrieb, für den Zugang ins Personalrestaurant, für den Kauf von Fahrkarten, für den Kauf von Lebensmitteln oder für den Restaurant- oder Barbesuch. Oft sind jedoch die Anwendungen von RFID-Tags nicht aufeinander abgestimmt, sodass beispielsweise für jedes der genannten Beispiele eine separate Karte mit angebrachtem RFID-Tag mitgeführt werden muss. Bei der Verwendung von derartigen RFID-Tags ist es beispielsweise auch nicht möglich, dass auf der Seite des Benutzers ein Protokoll über die Verwendung des RFID-Tags erstellt werden kann. Ein solches Protokoll ist zwar auf der Seite des RFID-Lesegeräts erstellbar, der Benutzer hat jedoch keine Möglichkeit bei einem Protokollfehler auf der Seite des RFID-Lesegeräts die Verwendung des RFID-Tags mit einem eigenen Protokoll, beispielsweise für eine Gegendarstellung, zu dokumentieren. Der Benutzer eines RFID-Tags kann auch nicht ausschliessen, dass RFID-Identifikationsdaten von einem oder mehreren RFID-Tags unberechtigt ausgelesen werden. Handelt es sich beispielsweise um ein RFID-Lesegerät an einer Kasse, dann wird von Kunden oft die ganze Brieftasche auf das RFID-Lesegerät gelegt und dabei vergessen, dass damit RFID-Identifikationsdaten von allen RFID-Tags, welche sich in der Brieftasche befinden, irrtümlich oder missbräuchlich ausgelesen werden können.

### Offenbarung der Erfindung

Es ist eine Aufgabe der vorliegenden Erfindung, ein neues Verfahren und ein neues System zum Übertragen von RFID-Identifikationsdaten an ein RFID-Lesegerät vorzuschlagen, welche insbesondere die beschriebenen Probleme des Standes der Technik nicht aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mindestens zwei Request-IDs mit zugeordneten RFID-Identifikationsdaten in einer Lookup-Tabelle in einem Speichermodul abgespeichert werden, dass ein RFID-Lesegerät einen Request zur Übertragung von RFID-Identifikationsdaten an ein RFID-Tag sendet, wobei der Request mindestens eine Request-ID umfasst, dass das RFID-Tag die Request-ID des Requests zur Übertragung von RFID-Identifikationsdaten an eine Steuereinheit des RFID-Tags überträgt, dass die Steuereinheit mittels der im Speichermodul abgespeicherten Lookup-Tabelle die der Request-ID zugeordneten RFID-Identifikationsdaten bestimmt, und dass mittels des RFID-Tags die der Request-ID zugeordneten RFID-Identifikationsdaten an das RFID-Lesegerät übertragen werden. Ein solches Verfahren hat insbesondere den Vorteil, dass mittels nur einem RFID-Tag die RFID-Identifikationsdaten auf unterschiedliche Verwendungen abstimmbar sind.

In einer Ausführungsvariante sendet das RFID-Lesegerät den Request zur Übertragung von RFID-Identifikationsdaten basierend auf Daten eines dem RFID-Lesegerät zugeordneten Bewegungsdetektors aus. Eine solche Ausführungsvariante hat insbesondere den Vorteil, dass das RFID-Lesegerät nur dann aktiviert wird, wenn eine Übertragung von RFID-Identifikationsdaten zu erwarten ist. Dies führt einerseits zu einer Energieersparnis und andererseits zu einer Reduktion von Elektrosmog.

In einer weiteren Ausführungsvariante sendet das RFID-Lesegerät den Request zur Übertragung von RFID-Identifikationsdaten zu bestimmbaren Zeitpunkten oder nach Ablauf von bestimmbaren Zeitintervallen aus. Eine solche Ausführungsvariante hat insbesondere den Vorteil, dass das RFID-Lesegerät nur zu bestimmbaren Zeitpunkten aktiviert werden muss und somit insbesondere eine Energieersparnis und eine Reduktion von Elektrosmog erzielbar ist.

In einer anderen Ausführungsvariante wir die Lookup-Tabelle in einem Speichermodul der Steuereinheit abgespeichert. Diese Ausführungsvariante hat insbesondere den Vorteil, dass der RFID-Tag besonders kompakt ausgeführt werden kann.

In einer Ausführungsvariante wird die Lookup-Tabelle in ein Speichermodul einer mit einem Telekommunikationsnetzwerk verbindbaren Zentraleinheit abgespeichert. Diese Ausführungsvariante hat insbesondere den Vorteil, dass Request-lDs und RFID-Identifikationsdaten zentral verwaltet und dass mittels des Telekommunikationsnetzwerks, insbesondere mittels eines Mobilfunknetzwerks, RFID-Identifikationsdaten stets verfügbar sind.

In einer anderen Ausführungsvariante fordert die Steuereinheit mittels einer von einem Benutzer bedienbaren Eingabeeinheit eine Bestätigungseingabe des Benutzers zur Übertragung von RFID-Identifikationsdaten an das RFID-Lesegerät an. Eine solche Ausführungsvariante hat insbesondere den Vorteil, dass der Benutzer stets über die Übertragung von RFID-Identifikationsdaten informiert wird.

In einer weiteren Ausführungsvariante werden bestimmbare Request-IDs und/oder RFID-Identifikationsdaten aus der Lookup-Tabelle mit abspeicherbaren Request-IDs und entsprechenden RFID-Identifikationsdaten gelöscht, in dieser Lookup-Tabelle modifiziert und/oder zu dieser Lookup-Tabelle hinzugefügt. Eine solche Ausführungsvariante hat insbesondere den Vorteil, dass Einträge der Lookup-Tabelle beispielsweise durch den Benutzer aktualisiert werden können.

In einer anderen Ausführungsvariante wird mittels der Steuereinheit die Übertragung von RFID-Identifikationsdaten protokolliert. Eine solche Ausführungsvariante hat insbesondere den Vorteil, dass die Übertragung von RFID-Identifikationsdaten belegt werden kann.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm eines erfindungsgemässen Systems.
Figur 2 zeigt ein Blockdiagramm einer Lookup-Tabelle.

### Ausführungsform(en) der Erfindung

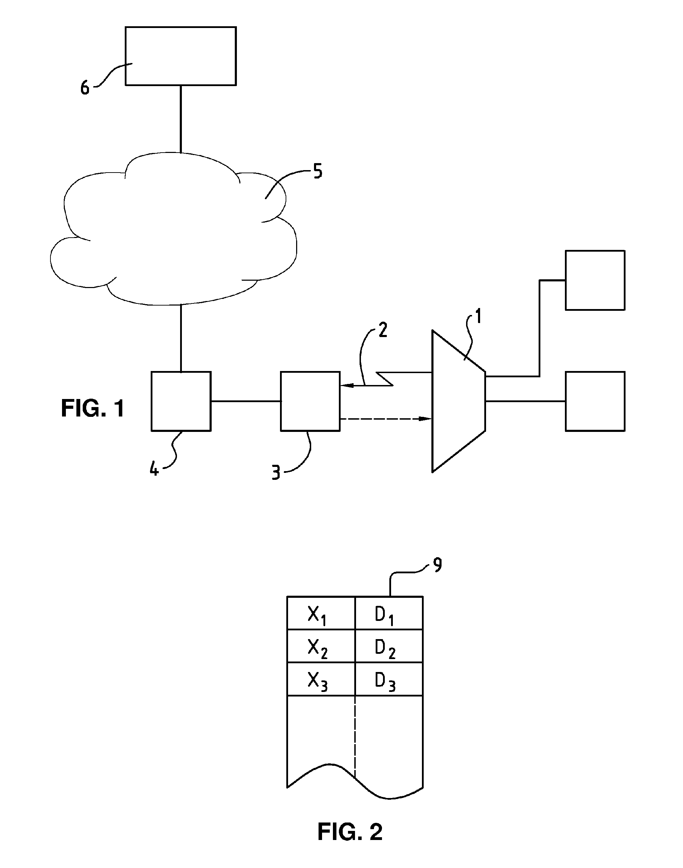

In Figur 1 bezieht sich das Bezugszeichen 1 auf ein RFID-Lesegerät und das Bezugszeichen 3 bezieht sich auf einen RFID-Tag. Das RFID-Lesegerät unterstützt beispielsweise die Übertragung von RFID-Identifikationsdaten von RFID-Tags gemäss dem ISO 15693 Standard, gemäss dem Tag-it HF (TI) Standard, gemäss dem I-code (Philips) Standard oder gemäss irgendeinem anderen Standard. Das Bezugszeichen 2 bezieht sich auf einen Request des RFID-Lesegeräts 1 zur Übertragung von RFID-Identifikationsdaten. Der Request 2 umfasst mindestens eine Request-ID. Die Request-ID kann beispielsweise mittels eines Schreibmodus des RFID-Lesegeräts auf den RFID-Tag 3 übertragen werden. Der Request 2 kann also beispielsweise zweiteilig aufgebaut sein. In einem ersten Teil wird die Request-ID durch das Schreiben von Daten vom RFID-Lesegerät auf dem RFID-Tag 3 abgespeichert. In einem zweiten Teil werden in einem Lesemodus RFID-Identifikationsdaten durch das RFID-Lesegerät 1 aus dem RFID-Tag 3 ausgelesen. Der RFID-Tag 3 verfügt dabei über die notwendigen Mittel, wie beispielsweise eine Antenne und elektronische Bauelemente, für den Empfang und das Abspeichern von Daten sowie zur Übertragung von RFID-Identifikationsdaten an das RFID-Lesegerät 1. In Figur 1 bezieht sich das Bezugszeichen 4 auf eine Steuereinheit. Die Steuereinheit 4 kann beispielsweise mittels weiterer elektronischer Bauelemente im RFID-Tag integriert sein. Die Steuereinheit 4 kann aber auch in irgendeinem anderen Gerät, welches mit dem RFID-Tag verbindbar ist, angebracht sein. In einer Ausführungsvariante ist der RFID-Tag am Gehäuse eines Mobilfunktelefons angebracht, wobei der RFID-Tag über eine Schnittstelle mit dem Mobilfunktelefon verbindbar ist, und wobei die Steuereinheit 4 beispielsweise als Softwaremodul ausgestaltet ist, welches auf einem Mikroprozessor des Mobilfunktelefons abläuft. Die Steuereinheit 4 umfasst Mittel, um Daten, insbesondere die Request-ID, aus dem RFID-Tag auszulesen und um Daten, insbesondere RFID-Identifikationsdaten, auf dem RFID-Tag abzuspeichern.

In Figur 2 bezieht sich das Bezugszeichen 9 auf eine Lookup-Tabelle. Die Lookup-Tabelle 9 ist derart eingerichtet, dass die Steuereinheit 4 auf Daten der Lookup-Tabelle 9 zugreifen kann. Beispielsweise ist die Lookup-Tabelle 9 in der Steuereinheit 4 angebracht. Die Lookup-Tabelle 9 umfasst Request-IDs sowie den Request-IDs zugeordnete RFID-Identifikationsdaten. Mittels geeigneter Mittel können Daten in der Lookup-Tabelle 9 abgespeichert, modifiziert oder gelöscht werden. Beispielsweise können mittels der Eingabeelemente und einer Menuführung eines Mobilfunktelefons sowohl die Request-IDs als auch die RFID-Identifikationsdaten eingegeben und mittels eines Softwaremoduls in der Lookup-Tabelle 9 der als Softwaremodul ausgestalteten Steuereinheit 4 abgespeichert werden.

In einem Anwendungsbeispiel ist das RFID-Lesegerät mit einem Steuergerät zur Steuerung des Schliessmechanismus einer Eingangstüre verbunden. Das RFID-Lesegerät ist beispielsweise so konfiguriert, dass dieses zu bestimmbaren Zeitpunkten überprüft, ob ein RFID-Tag im Wirkungsbereich des RFID-Lesegeräts detektierbar ist. Sobald ein RFID-Tag detektiert wird, sendet das RFID-Lesegerät einen Request zur Übertragung von RFID-Identifikationsdaten 2. In einer anderen Variante ist das RFID-Lesegerät mit einem Bewegungsdetektor zur Detektion von Bewegungen innerhalb des Wirkungsbereichs des RFID-Lesegeräts verbunden. Sobald der Bewegungsdetektor eine entsprechende Bewegung detektiert, sendet das RFID-Lesegerät einen Request zur Übertragung von RFID-Identifikationsdaten 2 aus. Wie erwähnt, kann der Request zur Übertragung von RFID-Identifikationsdaten 2 aus zwei Teilen bestehen. In einem ersten Teil schreibt das RFID-Lesegerät in einem Schreibmodus eine Request-ID auf den RFID-Tag und in einem zweiten Teil sendet das RFID-Lesegerät eine Aufforderung zur Übertragung von RFID-Identifikationsdaten an den RFID-Tag. Die Steuereinheit 4 ist beispielsweise so eingerichtet, dass der Speicherbereich des RFID-Tags zur Abspeicherung einer Request-ID zu bestimmbaren Zeitpunkten, beispielsweise nach Ablauf von bestimmbaren Zeitintervallen, auf neue Daten überprüft wird. Somit kann eine Request-ID, welche durch das RFID-Lesegerät auf den RFID-Tag geschrieben wird, innerhalb eines bestimmbaren Zeitintervalls von der Steuereinheit 4 erfasst werden. Selbstverständlich sind dem Fachmann eine Vielzahl von anderen Möglichkeiten bekannt um zu gewährleisten, dass eine Request-ID an die Steuereinheit 4 übertragen werden kann. Mittels der Lookup-Tabelle 9 ordnet die Steuereinheit 4 der Request-ID die entsprechenden RFID-Identifikationsdaten zu und speichert diese RFID-Identifikationsdaten auf dem RFID-Tag ab. Vom Abspeichern der Request-ID durch das RFID-Lesegerät bis zum Abspeichern der RFID-Identifikationsdaten durch die Steuereinheit 4 wird ein bestimmbares Zeitintervall beansprucht. In diesem Zeitintervall kann die Aufforderung des RFID-Lesegeräts zur Übertragung von RFID-Identifikationsdaten durch den RFID-Tag nicht beantwortet werden. Das RFID-Lesegerät ist deshalb beispielsweise so eingerichtet, dass dieses die Aufforderung zur Übertragung von RFID-Identifikationsdaten beispielsweise erst nach einer bestimmbaren Zeitverzögerung aussendet oder diese Aufforderung zu bestimmbaren Zeitpunkten wiederholt. Sobald die RFID-Identifikationsdaten vom RFID-Lesegerät empfangen worden sind, können diese an weitere Geräte, wie beispielsweise das eingangs dieses Abschnitts erwähnte Steuergerät zur Steuerung eines Schliessmechanismus einer Eingangstüre, übertragen und von diesen Geräten weiter verarbeitet werden (wie beispielsweise das Überprüfen der RFID-Identifikationsdaten und gegebenenfalls Freischalten des Schliessmechanismus der Eingangstüre).

In einer vorteilhaften Ausführungsvariante ist der RFID-Tag an einem Mobilfunkgerät angebracht und die Steuereinheit 4 ist als Softwaremodul, welches auf einem Mikroprozessor des Mobilfunkgeräts ablauffähig ist, ausgestaltet. Die Steuereinheit 4 ist somit wie in Figur 1 gezeigt über ein Telekommunikationsnetzwerk 5 mit einer Zentraleinheit 6 des Telekommunikationsnetzwerks 5 verbindbar. Eine solche Ausführungsvariante führt zu einer grossen Vielzahl vorteilhafter Anwendungen. Beispielsweise kann so ein Backup der Lookup-Tabelle 9 auf der Zentraleinheit 6 abgespeichert werden. Dies hat insbesondere den Vorteil, dass ein Benutzer bei einem Verlust des Mobilfunkgeräts seine bevorzugten RFID-Identifikationsdaten sehr bequem auf ein Ersatzgerät übertragen kann. Oder es können beispielsweise in der Steuereinheit 4 und/oder der Zentraleinheit 6 elektronische Schlüssel zur Authentifizierung und/oder Verschlüsselung von Request-lDs, RFID-Identifikationsdaten oder irgendwelchen anderen Daten, welche für die Durchführung des Verfahrens vorteilhafte Wirkungen haben, abgespeichert werden. Dies hat insbesondere den Vorteil, dass beispielsweise die Lookup-Tabelle 9 in der Zentraleinheit 6 abgespeichert werden kann und dass ein Benutzer, bei Verwendung eines korrekten Schlüssels wie beispielsweise eines PIN (Personal Identification Number), mittels verschiedene Mobilfunkgeräte für die Bereitstellung von RFID-Identifikationsdaten verwenden kann.

## Patentansprüche

1. Verfahren zur Übertragung von RFID-Identifikationsdaten an ein RFID-Lesegerät (1), **dadurch gekennzeichnet,**
**dass** mindestens zwei Request-IDs (x₁,x₂,x₃) mit zugeordneten RFID-Identifikationsdaten (D₁,D₂,D₃) in einer Lookup-Tabelle (9) in einem Speichermodul abgespeichert werden,
**dass** das RFID-Lesegerät (1) einen Request zur Übertragung von RFID-Identifikationsdaten (2) an einen RFID-Tag (3) sendet, wobei der Request mindestens eine Request-ID umfasst,
**dass** der RFID-Tag (3) die Request-ID des Requests zur Übertragung von RFID-Identifikationsdaten an eine Steuereinheit (4) des RFID-Tags (3) überträgt,
**dass** die Steuereinheit (4) mittels der im Speichermodul abgespeicherten Lookup-Tabelle (9) die der Request-ID zugeordneten RFID-Identifikationsdaten bestimmt, und
**dass** mittels des RFID-Tags (3) die der Request-ID zugeordneten RFID-Identifikationsdaten an das RFID-Lesegerät (1) übertragen werden.

2. Verfahren nach Anspruch 1, **dadurch gekennzeichnet, dass** das RFID-Lesegerät den Request zur Übertragung von RFID-Identifikationsdaten basierend auf Daten eines dem RFID-Lesegerät zugeordneten Bewegungsdetektors aussendet.

3. Verfahren nach einem der Ansprüche 1 bis 2, **dadurch gekennzeichnet, dass** das RFID-Lesegerät den Request zur Übertragung von RFID-Identifikationsdaten zu bestimmbaren Zeitpunkten oder nach Ablauf von bestimmbaren Zeitintervallen aussendet.

4. Verfahren nach einem der Ansprüche 1 bis 3, **dadurch gekennzeichnet, dass** die Lookup-Tabelle in einem Speichermodul der Steuereinheit abgespeichert wird.

5. Verfahren nach einem der Ansprüche 1 bis 4, **dadurch gekennzeichnet, dass** die Lookup-Tabelle in ein Speichermodul einer mit einem Telekommunikationsnetzwerk (5) verbindbaren Zentraleinheit (6) abgespeichert wird.

6. Verfahren nach einem der Ansprüche 1 bis 5, **dadurch gekennzeichnet, dass** die Steuereinheit mittels einer von einem Benutzer bedienbaren Eingabeeinheit eine Bestätigungseingabe des Benutzers zur Übertragung von RFID-Identifikationsdaten an das RFID-Lesegerät anfordert.

7. Verfahren nach einem der Ansprüche 1 bis 6, **dadurch gekennzeichnet, dass** die Steuereinheit mittels einer von einem Benutzer ablesbare Anzeigeeinheit mindestens eine Identifikation von RFID-Identifikationsdaten dem Benutzer anzeigt.

8. Verfahren nach einem der Ansprüche 1 bis 7, **dadurch gekennzeichnet, dass** bestimmbare Request-IDs und/oder RFID-Identifikationsdaten aus der Lookup-Tabelle mit abspeicherbaren Request-IDs und entsprechenden RFID-Identifikationsdaten gelöscht, in dieser Lookup-Tabelle modifiziert und/oder zu dieser Lookup-Tabelle hinzugefügt werden.

9. Verfahren nach einem der Ansprüche 1 bis 8, **dadurch gekennzeichnet, dass** mittels der Steuereinheit 4 die Übertragung von RFID-Identifikationsdaten protokolliert wird.

10. System zur Übertragung von RFID-Identifikationsdaten an ein RFID-Lesegerät (1), **dadurch gekennzeichnet,**
**dass** in einem Speichermodul mindestens zwei Request-IDs (x₁,x₂,x₃) mit zugeordneten RFID-Identifikationsdaten (D₁,D₂,D₃) in einer Lookup-Tabelle (9) abspeicherbar sind,
**dass** mittels des RFID-Lesegeräts (1) einen Request, welcher mindestens eine Request-ID umfasst, zur Übertragung von RFID-Identifikationsdaten (2) an einen RFID-Tag (3) aussendbar ist,
**dass** mittels des RFID-Tags (3) die Request-ID des Requests zur Übertragung von RFID-Identifikationsdaten an eine Steuereinheit (4) des RFID-Tags (3) übertragbar ist,
**dass** mittels der Steuereinheit (4) sowie mittels der im Speichermodul abgespeicherten Lookup-Tabelle (9) die der Request-ID zugeordneten RFID-Identifikationsdaten bestimmbar ist, und
**dass** mittels des RFID-Tags (3) die der Request-ID zugeordneten RFID-Identifikationsdaten an das RFID-Lesegerät (1) übertragbar sind.

11. System nach Anspruch 10, **dadurch gekennzeichnet, dass** Request-IDs und RFID-Identifikationsdaten über ein Telekommunikationsnetzwerk zwischen der Steuereinheit 4 und einer Zentraleinheit 6 übertragbar sind.

12. System nach einem der Ansprüche 10 bis 11, **dadurch gekennzeichnet, dass** die Übertragung von RFID-Identifikationsdaten mittels einer von einem Benutzer bedienbaren Bestätigungseinheit auslösbar ist.

13. System nach einem der Ansprüche 10 bis 12, **dadurch gekennzeichnet, dass** einem Benutzer eine Identifikation von RFID-Identifikationsdaten mittels einer Anzeigeeinheit anzeigbar ist.

14. System nach einem der Ansprüche 10 bis 13, **dadurch gekennzeichnet, dass** die Übertragung von RFID-Identifikationsdaten mittels einer Protokolleinheit protokollierbar ist.
